# DEMANDE DE BREVET EUROPEEN

(11) **EP 0 943 821 A2**
(43) Date de publication de la demande: **22.09.1999**
(21) Numéro de dépôt: 99104576.6
(22) Date de dépôt: 08.03.1999
(51) Int. Cl.: F16B 12/44, A47B 96/20, E06B 3/964

(54) **Cadre pour portes et panneaux de meubles**

(30) Priorité: 17.03.1998 IT VI980054
(71) Demandeur: Arc Linea Arredamenti S.p.A., 36030 Caldogno (Vicenza) (IT)
(72) Inventeur: Fortuna, Silvio, 36030 Caldogno (Vicenza) (IT)
(74) Mandataire: Bettello, Pietro, Dott. Ing.

(57) **Abrégé**

Il s'agit d'un cadre pour portes et panneaux de meubles comprenant quatre profilés (3) disposés pour former les côtés d'un rectangle. La caractéristique fondamentale du dispositif selon l'invention est constituée par le fait qu'au droit d'au moins l'un de ses angles, mais aussi au droit de tous ses angles, ce cadre présente une structure angulaire comprenant un élément extérieur (6) de forme arrondie ou émoussée.

## Description

La présente invention concerne un cadre pour portes et panneaux de meuble, selon le préambule de la revendication 1.

On utilise depuis longtemps dans le domaine de l'ameublement, afin de réaliser des portes et panneaux de meuble, des cadres qui comprennent quatre profilés, généralement en bois ou en aluminium, disposés pour former les cotés d'un rectangle.

Dans la surface desdits profilés qui est dirigée vers l'extérieur est prévue au moins une rainure dans laquelle se loge, en ce qui concerne l'épaisseur, la porte ou le panneau encadré par le cadre.

En fait, ces cadres sont utilisés, dans la majeure partie des cas, pour réaliser des portes en verre aptes à fermer des buffets et analogues de mobilier de cuisine.

Le défaut fondamental de ces cadres consiste dans le fait que leurs angles sont particulièrement pointus et que, en conséquence, un contact accidentel de ces angles avec l'usager est susceptible de provoquer de notables dommages physiques ; pour chercher à résoudre, au moins partiellement, ce problème, on a cherché à déterminer un certain émoussement des extrémités des parties extérieures des cadres qui entrent en contact mutuel mais, évidemment, il n'est pas possible de résoudre entièrement le problème, justement en raison de la nécessité de devoir mettre les différentes parties du cadre en contact mutuel.

Le but de la présente invention est de réaliser un cadre du type décrit précédemment qui soit exempt des inconvénients cités plus haut.

Ceci est obtenu conformément aux caractéristiques de la partie caractérisante de la revendication 1.

On prévoit un cadre du type décrit précédemment dans lequel, au droit d'au moins un de ses angles, se trouve une structure angulaire conformée selon les côtés d'un angle droit ; lesdits côtés sont aptes à se placer à la cote exacte et entièrement à l'intérieur des extrémités creuses des profilés formant le cadre ; en outre, il est en particulier prévu que, sur l'angle extérieur de la structure angulaire, se trouve un élément en relief de forme arrondie ou émoussée.

Cet élément présente des portions latérales contre lesquelles sont susceptibles de se placer en contact les bords d'extrémité des profilés dans lesquels la structure angulaire est insérée.

De cette façon, le problème posé est résolu, puisqu'à la place des angles présents dans les réalisations du type connu, vient se trouver l'élément en relief de forme arrondie ou émoussée.

Ces caractéristiques de l'invention ainsi que d'autres seront maintenant décrites ci-après en détail, en se référant aux planches de dessin annexé sur lesquelles :
La Fig. 1 (planche I) représente une vue avant complète du cadre selon l'invention, avec une porte à l'intérieur.
La Fig. 2 représente une vue en coupe d'une portion angulaire du cadre lui-même.
La Fig. 3 (planche II) représente une vue axonométrique d'un détail du cadre selon l'invention.
La Fig. 4 (planche III) représente une vue éclatée d'une portion angulaire d'un cadre selon l'invention.

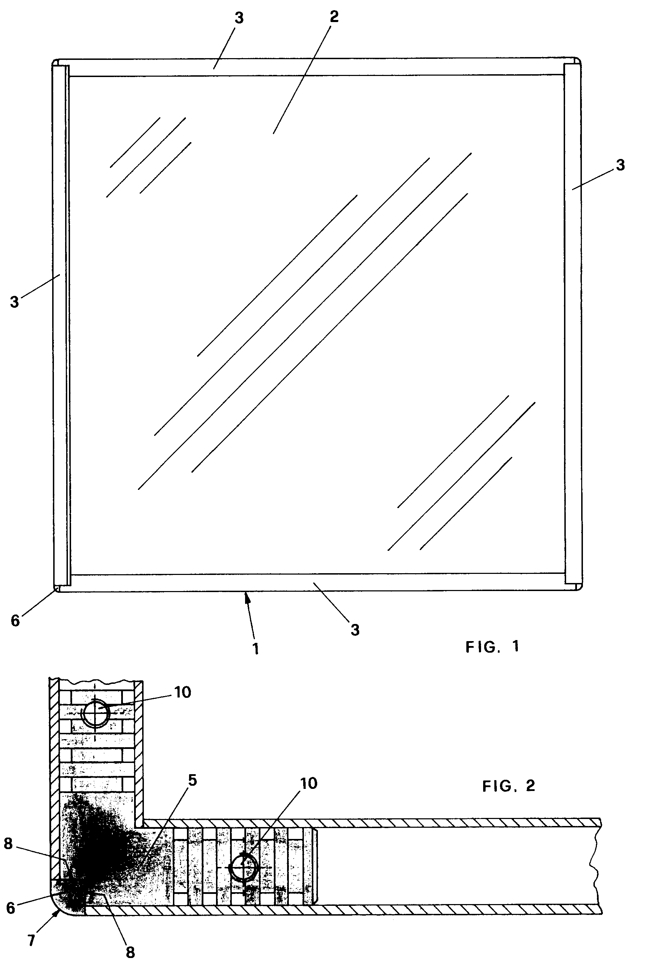

Sur la Fig. 1 , on voit que le cadre 1 selon l'invention est apte à contenir des portes 2 et des panneaux de meubles en général, en particulier en verte.

Ce cadre comprend, de façon classique, quatre profilés 3 disposés pour former les côtés d'un rectangle.

En général, ces profilés sont réalisés en aluminium ou autre métal léger et seront de préférence entièrement creux pour pouvoir obtenir des éléments de poids modérés.

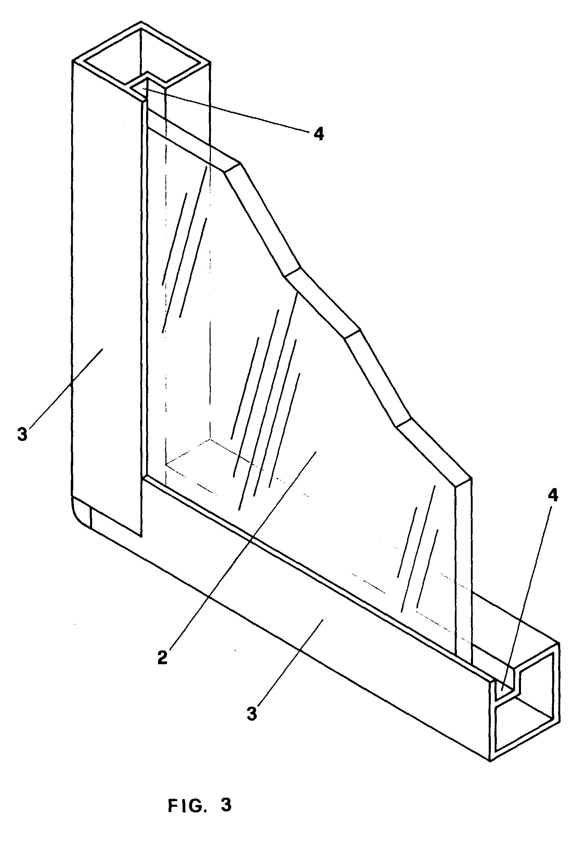

Comme on le voit sur la Fig. 3, au droit de la surface desdits profilés qui est dirigée vers l'intérieur, est prévue une rainure 4 dans laquelle se loge, pour l'épaisseur, la porte 2 ou, de toute façon, le panneau encadré par le cadre lui-même.

Une caractéristique fondamentale du dispositif selon l'invention est constituée par le fait qu'au droit d'au moins un de ses angles, et en particulier de ceux contre lesquels l'usager est susceptible de se heurter par inadvertance, est prévue une structure angulaire 5 conformée selon les côtés d'un angle droit.

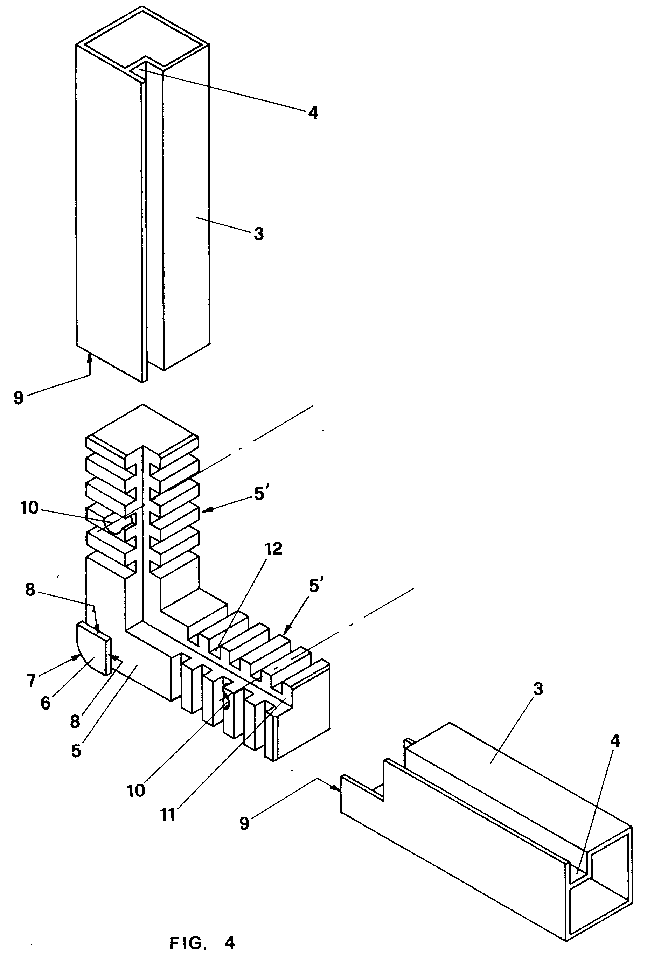

Les côtés 5' sont aptes à se placer à la cote exacte, ainsi qu'entièrement (voir Fig. 4) dans les extrémités creuses de deux profilés 3 contigus, en jouant en pratique le rôle d'un élément de raccordement entre ces derniers.

Il est prévu en particulier que, sur l'angle extérieur de la structure angulaire 5, se trouve un élément en relief 6 qui présente extérieurement une surface 7 arrondie comme sur les Figures, ou encore émoussée. Ledit élément présente en outre des portions latérales 8 contre lesquelles sont susceptibles de se placer en contact les bords d'extrémité 9 des profilés 3 dans lesquels la structure angulaire 5 est insérée, lesdites portions latérales jouant en pratique le rôle d'un élément d'arrêt pour lesdits profilés.

Ces derniers seront fixés à la structure angulaire par un moyen adapté quelconque, en particulier à l'aide de moyens d'assemblage mobiles, comme des vis ou analogues enfilés dans des trous appropriés 10 prévus sur les côtés 5' de la structure angulaire 5.

Les côtés de cette dernière devront présenter, vus en coupe transversale, la même forme que celle prise par la section transversale des profilés 3.

En particulier, les côtés 5' devront présenter aussi une rainure 11 située dans la zone qui viendra se placer au niveau de la rainure 4 profilés 3 dans laquelle vont se placer les bords de la porte 2.

En outre, toujours sur lesdits côtés 5', pourront être prévues des rainures auxiliaires 12 ayant pour seul but d'alléger l'ensemble de la structure.

Les profilés 3 ne devront nécessairement être creux qu'au droit de leurs extrémités, pour leur permettre de recevoir intérieurement les côtés 5' de la structure angulaire 5 ; toutefois, pour des raisons de simplicité et de légèreté, les profilés 3 pourront aussi être entièrement creux sur toute leur longueur.

Il ressort donc de ce qui précède que le cadre selon l'invention satisfait les buts fixés précédemment, en permettant, en particulier d'obtenir une structure qui présente des angles émoussés ou arrondis, le tout grâce à une disposition de construction qui est particulièrement simple.

Le cadre selon l'invention peut présenter la structure émoussée ou arrondie décrite précédemment à tous ses angles latéraux ou encore uniquement à ceux contre lesquels l'usager peut entrer en contact par inadvertance.

## Revendications

1. Cadre pour portes et panneaux de meubles, comprenant quatre profilés (3) disposés pour former les côtés d'un rectangle, cependant qu'il est prévu, dans la surface desdits profilés qui est dirigée vers l'intérieur, au moins une rainure (4) dans laquelle se loge, en ce qui concerne l'épaisseur, la porte (2) ou le panneau encadré par le cadre, lequel est caractérisé par le fait qu'à au moins un de ses angles, se trouve une structure angulaire (5) conformée selon les côtés d'un angle droit, lesdits côtés (5') étant aptes à se placer à la cote exacte et entièrement dans les extrémités creuses des profilés (3), cependant qu'il est prévu, sur l'angle extérieur de la structure angulaire (5), un élément en relief (6) qui présente une surface extérieure (7) arrondie ou émoussée et des portions latérales (8) contre lesquelles sont susceptibles de se placer en contact les bords d'extrémité des profilés dans lesquels la structure angulaire est insérée.

2. Cadre selon la revendication 1, caractérisé en ce qu'il présente une structure angulaire (5) à chacun de ses angles.
